# EUROPÄISCHE PATENTSCHRIFT

(11) **EP 0 512 380 B1**
(45) Veröffentlichungstag und Bekanntmachung des Hinweises auf die Patenterteilung: **21.06.1995**
(21) Anmeldenummer: 92107260.9
(22) Anmeldetag: 29.04.1992
(51) Int. Cl.: B60Q 3/02

(54) **Verschwenkbare Leseleuchte für Fahrzeuge, insbesondere Flugzeuge**
Articulated reading light for vehicle, particularly for aircraft
Lampe de lecture pivotante pour véhicule, en particulier pour avion

(30) Priorität: 06.05.1991 DE 9105582 U
(43) Veröffentlichungstag der Anmeldung: 11.11.1992
(73) Patentinhaber: Hella KG Hueck & Co., 59552 Lippstadt (DE)
(72) Erfinder: Dietzsch, Werner, W-2900 Oldenburg (DE); Wisch, Bodo, W-2800 Bremen (DE)

(56) Entgegenhaltungen:
- DE-A- 2 507 857
- DE-U- 8 217 591

## Beschreibung

Die Erfindung betrifft eine verschwenkbare Leseleuchte für Fahrzeuge, insbesondere Flugzeuge, mit einem Gehäuse, das ein erstes Gehäuseteil zur Montage in dem Fahrzeug aufweist, ein zweites Gehäuseteil aufweist, das verschwenkbar in dem ersten Gehäuseteil angeordnet ist und ein drittes Gehäuseteil aufweist, das über eine Rasteinrichtung mit dem zweiten Gehäuseteil verbindbar ist und eine Lichtscheibe aufweist und mit einer Lichtquelle in dem Gehäuse.

Aus dem deutschen Gebrauchsmuster G 82 17 591 ist eine Leseleuchte, insbesondere zur Sitzplatzbeleuchtung in Fahrzeugen bekannt, bei der das Gehäuse der Leseleuchte aus mehreren Teilen besteht. Ein erstes Gehäuseteil dient dazu, die Leseleuchte in z. B. ein Paneel oberhalb von Sitzen eines Flugzeuges lagefest einzubauen. Ein zweites Gehäuseteil ist verschwenkbar in dem ersten Gehäuseteil angeordnet, so daß der Lichtstrahl der Leseleuchte auf einen Sitzplatz eingestellt werden kann. Bei der bekannten Ausführung ist eine Lichtscheibe, die hier als eine optische Linse ausgebildet ist, über ein drittes Gehäuseteil, welches hier als ein Haltering ausgeführt ist mit dem zweiten Gehäuseteil verrastet. Zudem weist die Leseleuchte eine Lichtquelle in dem Gehäuse auf.

Dieses Dokument bildet den Oberbegriff Auspruchs 1.

Bei Leseleuchten dieser Art hat sich als nachteilig erwiesen, daß das Verschwenken durch den Fahrgast individuell vorgenommen werden kann, wobei es häufig zu Blendungen von Mitfahrern kommt und die Leseleuchte, obwohl diese nicht benötigt wird, in verschwenkter Stellung nicht abgeschaltet wird. Bei heutigen Leseleuchten ist das zweite Gehäuseteil derart fest mit dem ersten Gehäuseteil verbunden, so daß dieses nur durch ein spezielles Einstellwerkzeug gegenüber dem ersten Gehäuseteil verschwenkt werden kann. Hierzu ist es notwendig, ein Werkzeug an das zweite Gehäuseteil anzusetzen. Um dies je nach Bauart der Leseleuchte zu ermöglichen und Beschädigungen der Lichtscheibe und des dritten Gehäuseteils zu vermeiden, muß für die Einstellung der Leseleuchte auf einen bestimmten Sitzplatz das dritte Gehäuseteil mit der Lichtscheibe von der Leseleuchte entfernt werden. Da das dritte Gehäuseteil fest mit dem zweiten Gehäuseteil verrastet ist, führt das Entfernen häufig zu Beschädigungen des dritten Gehäuseteils und der Lichtscheibe. Die Einstellarbeiten werden z. B. bei einer Erstbestückung eines Flugzeugs mit Sitzen vorgenommen. Eine Anlieferung der Leseleuchte mit abgetrenntem dritten Gehäuseteil würde zu erheblichen Mehrkosten führen und auch den Aufwand bei der Montage für das montierende Personal erhöhen.

Der Erfindung liegt die Aufgabe zugrunde, eine Leseleuchte zu schaffen, die einfach und kostengünstig herstellbar ist und bei der das die Lichtscheibe aufweisende Gehäuseteil nach der Montage der Leuchte zur festen Einstellung des Lichtkegels der Leseleuchte einfach und ohne Beschädigung der Lichtscheibe von dem übrigen Gehäuse gelöst und nach Einstellung des Lichtkegels fest und sicher mit diesem verrastet werden kann.

Die Aufgabe wird erfindungsgemäß dadurch gelöst, daß die Rasteinrichtung aus auf dem Umfang und/oder auf dem Umfang verteilt angeordneten Rastelementen besteht, daß die Rastelemente als ein umlaufender Rastnocken oder eine umlaufende Rastnut und auf dem Umfang verteilt angeordneten Hebelteilen mit Rastnasen aufgebaut sind, daß die Rasteinrichtung eine Vormontagerasteinrichtung aufweist, daß die Vormontagerasteinrichtung Hebelteile mit Vorrastnasen und/oder Vorrastnocken aufweist, die eine geringere Länge und/oder Höhe haben als die Hebelteile, die Rastnasen und der Rastnocken oder die Rastnut der Rasteinrichtung.

Es ist von Vorteil, daß die Rasteinrichtung aus auf dem Umfang und/oder auf dem Umfang verteilt angeordneten Rastelementen besteht, daß die Rastelemente als ein umlaufender Rastnocken oder eine umlaufende Rastnut und auf dem Umfang verteilt angeordneten Hebelteilen mit Rastnasen aufgebaut sind, weil sich somit eine besonders einfache und kostengünstig herstellbare, sichere Rastverbindung zwischen dem zweiten Gehäuseteil und dem dritten Gehäuseteil realisieren läßt.

In diesem Zusammenhang ist es besonders vorteilhaft, daß die Rasteinrichtung eine Vormontagerasteinrichtung aufweist, daß die Vormontagerasteinrichtung Hebelteile mit Vorrastnasen und/oder Vorrastnocken oder eine Vorrastnut aufweist, die eine geringere Länge und/oder Höhe haben, als die Hebelteile, die Rastnasen und der Rastnocken oder die Rastnut der Rasteinrichtung, weil somit bei der Anlieferung der Leseleuchte das dritte Gehäuseteil mit der Lichtscheibe fest mit den übrigen Gehäuseteilen verbunden ist und somit kein zusätzlicher Aufwand bei der Lieferung und der Montage der Leseleuchte erforderlich ist und zudem ermöglicht wird, daß das dritte Gehäuseteil mit der Lichtscheibe nach der Montage der Leseleuchte einfach und ohne die Gefahr, die Lichtscheibe oder das dritte Gehäuseteil zu beschädigen, von dem übrigen Gehäuse gelöst werden kann und nach Einstellung des Lichtkegels auf eine vorgegebene Sitzfläche eine einfache, feste und sichere Endverrastung des dritten Gehäuseteils mit der Lichtscheibe an dem übrigen Gehäuse gewährleistet werden kann. Durch die Bereitstellung der Leseleuchte in einer Vormontageraststellung, die durch die Vormontagerasteinrichtung vorgegeben ist, ergibt sich zudem der Vorteil, daß nach Montage der Leseleuchten einfach und schnell die Leuchten erkennbar sind, die noch nicht auf einen Sitzplatz nach Bestückung, z. B. eines Flugzeugs mit Sitzreihen, eingestellt worden ist. Zudem können Lichtquellen die bei dem Transport beschädigt worden sind, nach einer ersten Funktionsprüfung der Leseleuchten einfach und ohne großen Aufwand ausgewechselt werden. Das Entfernen des dritten Gehäuseteils mit der Lichtscheibe gestaltet sich dabei besonders einfach, da dadurch, daß die Vormontagerasteinrichtung Hebelteile mit Vorrastnasen und/oder einen Vorrastnocken oder eine Vorrastnut aufweisen, die eine geringere Länge und/oder Höhe haben als die Hebelteile, die Rastnasen und die Rastnocken oder die Rastnut der Rasteinrichtung für das Lösen der Vormontagerasteinrichtung eine geringere Kraft erforderlich ist als für das Lösen der Rasteinrichtung. Zudem wird auf einfache Weise sichergestellt, daß das dritte Gehäuseteil mit der Lichtscheibe auch in der Vormontageraststellung fest mit den übrigen Gehäuseteilen der Leseleuchte verbunden ist.

Eine besonders einfache und kostengünstige Ausführungsform der Vormontagerasteinrichtung ergibt sich, wenn die Hebelteile der Vormontagerasteinrichtung die Hebelteile der Rasteinrichtung sind. Dadurch, daß die Vorrastnasen die Rastnasen der Rasteinrichtung sind und daß dem umlaufenden Rastnocken der Rasteinrichtung ein umlaufender Vorrastnocken mit einer Höhe in Montagerichtung vorgelagert ist, die geringer ist als die Höhe des Rastnockens, ergibt sich eine einfache und kostengünstige Ausführung der Rasteinrichtung und der Vormontagerasteinrichtung, bei der sichergestellt ist, daß zum einen das dritte Gehäuseteil leicht von dem zweiten Gehäuseteil lösbar ist und zum anderen die Rastkraft in der Vormontageraststellung gewährleistet, daß sich das dritte Gehäuseteil mit der Lichtscheibe bei der Anlieferung und der Montage der Leseleuchte nicht von dem zweiten Gehäuseteil löst.

In diesem Zusammenhang ist es von Vorteil, daß der Abstand zwischen dem Rastnocken und dem Vorrastnocken der Breite und der Form der Rastnase angepaßt ist, wodurch das dritte Gehäuseteil mit dem zweiten Gehäuseteil in der Vormontageraststellung kraft- und/oder formschlüssig verbunden ist.

Es ist von Vorteil, daß die Vorrastnocken die Rastnocken der Vormontagerasteinrichtung und der Rasteinrichtung sind und daß die Hebelteile eine Vorrastnase aufweisen, die der Rastnase in Montagerichtung vorgelagert ist, weil sich somit eine weitere einfache und kostengünstige Ausführungsform ergibt, die eine sichere Rastung sowohl in der Vormontageraststellung als auch in der Raststellung gewährleistet und zudem ein beschädigungsfreies Lösen der Lichtscheibe ermöglicht.

In diesem Zusammenhang ist es vorteilhaft, daß die Rastnase und die Vorrastnase unterschiedliche Höhen aufweisen, so daß die Rastkräfte für die Vormontageraststellung und die Raststellung einfach und kostengünstig festlegbar sind.

Auch bei dieser Ausführung ist es von Vorteil, daß der Abstand zwischen der Rastnase und der Vorrastnase der Breite und der Form des Rastnockens angepaßt ist, weil auch hierbei bei Anlieferung der Leseleuchte in der Vormontageraststellung eine lagefeste Anordnung des dritten Gehäuseteils gegenüber dem zweiten Gehäuseteil sichergestellt wird.

Es ist von Vorteil, daß die Hebelteile eine Vorrastnase aufweisen, die der Rastnase in Montagerichtung vorgelagert ist und daß dem Rastnocken ein Vorrastnocken in Montagerichtung nachgelagert ist, weil hierdurch eine besonders einfache und sichere Verrastung sowohl in der Vormontageraststellung als auch in der Raststellung gewährleistet wird und die Kräfte für die einzelnen Raststellungen besonders einfach und sicher eingestellt werden können. In diesem Zusammenhang erweist es sich als vorteilhaft, daß die Rastnase und die Vorrastnase unterschiedliche Höhen aufweisen und daß der Rastnocken und der Vorrastnocken unterschiedliche Höhen aufweisen.

Dadurch, daß der Abstand zwischen der Rastnase und der Vorrastnase dem Abstand zwischen dem Rastnocken und dem Vorrastnocken angepaßt ist, ergibt sich auch hier der Vorteil, daß das dritte Gehäuseteil mit der Lichtscheibe in der Vormontageraststellung lagefest, kraftschlüssig und/oder formschlüssig mit dem zweiten Gehäuseteil verbunden ist.

Es ist von Vorteil, daß jedem Hebelteil der Rasteinrichtung ein zweites Hebelteil zugeordnet ist, daß das zweite Hebelteil länger ist als das Hebelteil und daß das zweite Hebelteil eine Vorrastnase aufweist, die mit einem Rastnocken oder einem dem Rastnocken in Montagerichtung nachgelagerten Vorrastnocken eine Vormontagerasteinrichtung bildet, weil somit eine einfache und kostengünstige Vormontagerasteinrichtung geschaffen wird, bei der die Rastkräfte für die Vormontagerastung und die Endrastung besonders einfach und sicher eingestellt werden können.

Dadurch, daß die Abstände und die Formen des Rastnockens, des Vorrastnockens, der Rastnasen, der Vorrastnasen und der Anschläge zwischen dem zweiten Gehäuseteil und dem dritten Gehäuseteil derart ausgebildet sind, daß sowohl in der Vormontageraststellung als auch in der endgültigen Raststellung das zweite Gehäuseteil kraftschlüssig und/oder formschlüssig mit dem dritten Gehäuseteil verbunden ist, ergibt sich der Vorteil, daß die einzelnen Gehäuseteile eine feste definierte Lage zueinander einnehmen und nicht frei gegeneinander beweglich sind, was z. B. Klappergeräusche vermeiden hilft.

Dadurch, daß der umlaufende Rastnocken und/oder der Vorrastnocken auf dem inneren Umfang des zweiten Gehäuseteils angeordnet ist und daß die Hebelteile über den Umfang des dritten Gehäuseteils verteilt sind, ergibt sich eine besonders einfache und kostengünstige Ausführungsform der erfindungsgemäßen Leseleuchte.

Ein Ausführungsbeispiel der erfindungsgemäßen verschwenkbaren Leseleuchte für Fahrzeuge ist in den Zeichnungen dargestellt und wird im folgenden anhand der Zeichnungen näher beschrieben. Gleiche oder gleichwirkende Bauteile sind in allen Figuren mit gleichen Bezugszeichen versehen.

Es zeigen
Figur 1a, Figur 2a und Figur 3a Schnittzeichnungen erfindungsgemäßer Leseleuchten in unterschiedlichen Montagezuständen,
Figur 1b, Figur 2b und Figur 3b in vergrößerter Darstellung Rasteinrichtungen (R) mit Vormontagerasteinrichtungen, entsprechend den Figuren 1a, 2a und 3a,
Figur 4, Figur 5, Figur 6 unterschiedliche Ausführungsbeispiele der Rasteinrichtungen (R) in vergrößerter Detaildarstellung.

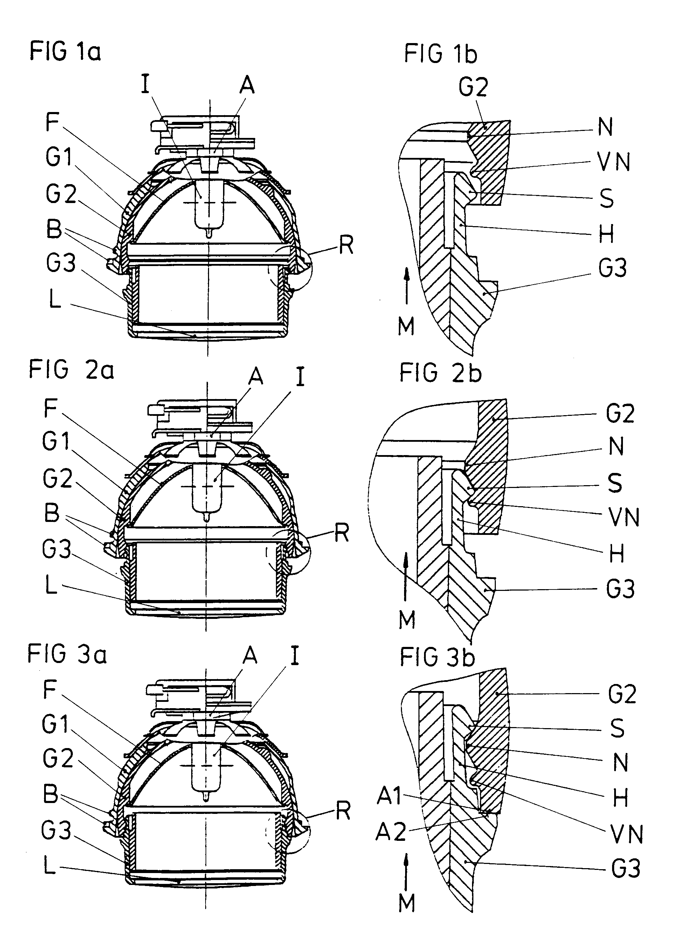

In den Figuren 1a, 2a und 3a ist eine erfindungsgemäße Leseleuchte im Schnitt gezeigt. Die Leseleuchte weist ein erstes Gehäuseteil (G1) auf, das lagefest z. B. in einem Paneel im Deckenbereich eines Flugzeugs befestigt werden kann. Das erste Gehäuseteil (G1) ist hier beispielhaft kugelschalenförmig ausgebildet und weist Befestigungselemente (B) zum Befestigen in z. B. einem Paneel eines Flugzeugs auf.

In dem ersten Gehäuseteil (G1) ist ein zweites Gehäuseteil (G2), das hier auch beispielhaft kugelschalenförmig ausgebildet ist, verschwenkbar angeordnet. Die Anordnung erfolgt dabei in einer solchen Weise, daß das Verschwenken des zweiten Gehäuseteils (G2) gegen das erste Gehäuseteil (G1) nicht von Hand, sondern nur mit einem Werkzeug durchgeführt werden kann. In dem zweiten Gehäuseteil (G2) ist hier beispielhaft ein Reflektor (F) angeordnet, der zur besseren Lichtausbeute einer über eine Fassung (A) in dem Gehäuse angeordneten Lichtquelle dient. Ein drittes Gehäuseteil (G3), das eine die Leseleuchte abschließende Lichtscheibe (L) aufweist, ist über eine Rasteinrichtung (R) mit dem zweiten Gehäuseteil (G2) fest verbindbar.

Die Rasteinrichtung (R) besteht hier beispielhaft aus Rastelementen, deren konkrete Ausgestaltung in den Figuren 1b, 2b, 3b, 4, 5 und 6 in unterschiedlicher Ausführungsform gezeigt sind.

Bei dem hier gewählten Ausführungsbeispiel bestehen die Rastelemente aus einem auf dem inneren Umfang des zweiten Gehäuseteils (G2) umlaufenden Rastnocken (N) und aus Hebelteilen (H), die über den Umfang des dritten Gehäuseteils verteilt sind und Rastnasen (S) zum Hintergreifen der Rastnocken (N).

Die Rasteinrichtungen (R) verfügen in allen Ausführungsbeispielen über eine Vormontagerasteinrichtung mit einer Vormontagerastung, bei der das dritte Gehäuseteil (G3) leicht und ohne die Lichtscheibe (L) zu beschädigen von dem zweiten Gehäuseteil (G2) gelöst werden kann.

In Figur 1a ist das dritte Gehäuseteil (G3) nicht mit dem zweiten Gehäuseteil (G2) verbunden.

Aus Figur 1b ist erkennbar, daß in Bezug auf die Montagerichtung (M) (siehe Pfeil) das dritte Gehäuseteil (G3) nicht mit dem zweiten Gehäuseteil (G2) verbunden ist, das hier beispielhaft gezeigte Hebelteil (H) und damit die zugehörige Rastnase (S) steht nicht im Eingriff mit dem gezeigten Vorrastnocken (VN) oder den Rastnocken (N).

Wie in Figur 2a gezeigt, befindet sich das Gehäuseteil (G3) bei diesem Einbauzustand in einer Vormontageraststellung, die durch die Vormontagerasteinrichtung des hier gewählten Ausführungsbeispiels vorgegeben ist.

Figur 2b zeigt diese Vormontagerasteinrichtung. Das dritte Gehäuseteil (G3) wurde hier soweit in das zweite Gehäuseteil (G2) in Montagerichtung (M) (siehe Pfeil) hineingeschoben, daß die Rastnase (S) des Hebelteils (H) hinter dem Vorrastnocken (VN) eingerastet ist.

Der Rastnocken (N) und der Vorrastnocken (VN) weisen hier unterschiedliche Höhen auf, das heißt, der Vorrastnocken (VN) weist hier eine geringere Höhe auf als der Rastnocken (N), so daß bei gegebener Elastizität des verwendeten Materials die Rastkraft der Vormontagerasteinrichtung geringer ist als die Rastkraft der Rasteinrichtung (R) durch den Rastnocken (N).

Um in der Vormontageraststellung eine lagesichere, kraftschlüssige und/oder formschlüssige Verbindung des zweiten Gehäuseteils (G2) mit dem dritten Gehäuseteils (G3) zu erreichen, ist der Abstand zwischen dem Rastnocken (N) und den Vorrastnocken (VN) der Breite und der Form der Rastnase (S) angepaßt.

Figur 3a zeigt die erfindungsgemäße Leseleuchte in dem nichtverschwenkten Zustand bei der das dritte Gehäuseteil und das zweite Gehäuseteil (G2) die endgültige Raststellung einnehmen.

Wie Figur 3b zu entnehmen ist, wurde das dritte Gehäuseteil (G3) soweit in Montagerichtung (M) (siehe Pfeil) in das zweite Gehäuseteil (G2) hineingeschoben, daß die Rastnase (S) des Hebelteils (H), das hier beispielhaft gezeigt ist, hinter dem umlaufenden Rastnocken (N) verrastet ist. Aufgrund der größeren Höhe des Rastnockens (N) gegenüber dem Vorrastnocken (VN) und der gegebenen Elastizität des Materials ergibt sich bei dieser endgültigen Raststellung eine sehr hohe Haltekraft, die sicherstellt, daß das dritte Gehäuseteil (G3) mit der Lichtscheibe (L) unter allen Belastungen fest und sicher mit dem zweiten Gehäuseteil (G2) verbunden ist. Damit in dieser Einbaulage keine Klappergeräusche auftreten und das zweite Gehäuseteil (G2) mit dem dritten Gehäuseteil (G3) formschlüssig und/oder kraftschlüssig verbunden ist, weist das zweite Gehäuseteil (G2) einen ersten Anschlag (A1), weist das dritte Gehäuseteil (G3) einen zweiten Anschlag (A2) auf und weist das Hebelteil (H) in Verbindung mit der Form der Rastnase (S) und der Ausgestaltung des Rastnockens (N) eine Länge auf, die sicherstellt, daß die Anschläge (A1, A2) formschlüssig oder kraftschlüssig aneinanderliegen.

Bei der hier gezeigten Ausführungsform der Rasteinrichtung (R) wird die Vormontagerasteinrichtung dadurch realisiert, daß in besonders einfacher und kostengünstiger Weise den umlaufenden Rastnocken (N) in Montagerichtung (M) (siehe Pfeil) ein umlaufender Vorrastnocken (VN) geringerer Höhe und damit geringerer Rastkraft vorgelagert ist.

Bei anderen Ausführungsbeispielen können die Rastnocken (N, VN) auch als Rastnuten ausgebildet sein.

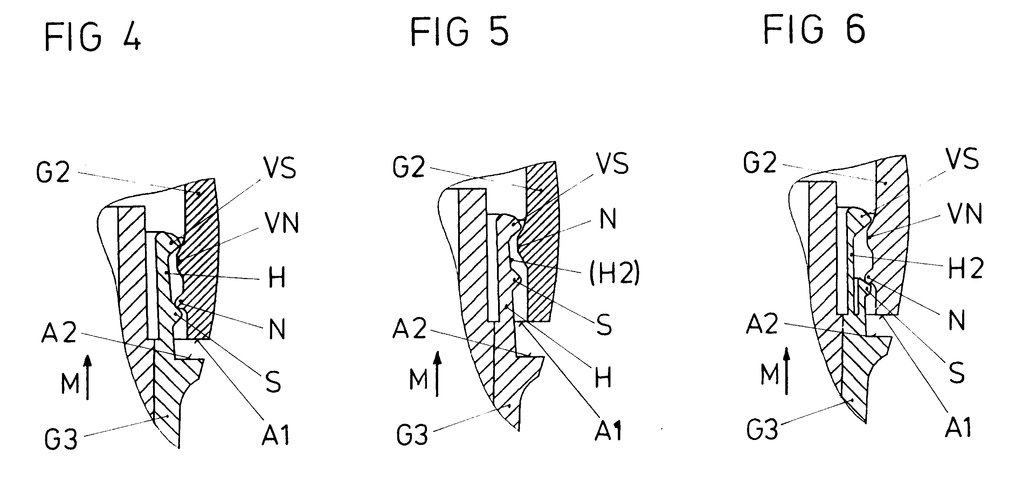

Figur 4 zeigt eine Rasteinrichtung, bei der das dritte Gehäuseteil (G3) soweit in das zweite Gehäuseteil (G2) in Montagerichtung eingeschoben wurde, daß die Vormontageraststellung erreicht wurde. Bei dem hier gezeigten Ausführungsbeispiel weist das Hebelteil (H) eine Rastnase (S) auf und weist das Hebelteil (H) eine Verlängerung auf mit einer der Rastnase (S) vorgelagerten Vorrastnase (VS). Zur Realisierung einer Vormontageraststellung ist dem Rastnocken (N) ein Vorrastnocken (VN) in Montagerichtung nachgelagert. Wie aus der Zeichnung erkennbar ist, sind die Formen und die Abstände der Rastnasen (S, VS) und Rastnocken (N, VN) so gewählt, daß in der Vormontageraststellung eine lagefeste, kraftschlüssige und/oder formschlüssige Verbindung des zweiten Gehäuseteils (G2) mit dem dritten Gehäuseteil (G3) erreicht wird. Da das hier beispielhaft gezeigte Hebelteil eine große Länge aufweist und die Rastnasen (N, VS) einen großen Abstand aufweisen, wird die geringere Rastkraft der Vormontageraststellung durch die Elastizität des Materials des dritten Gehäuseteils (G3) in Verbindung der Länge und der Anordnung der Rastnasen (S, VS) erreicht. Der Rastnocken (N) weist hier beispielhaft eine größere Höhe auf als der Vorrastnocken (VN).

Figur 5 zeigt ein Ausführungsbeispiel einer Rasteinrichtung, bei der wie bei dem Ausführungsbeispiel, das unter Figur 4 beschrieben wurde, das Hebelteil (H) eine Rastnase (S) und eine in Montagerichtung (M) (siehe Pfeil) vorgelagerte Vorrastnase (VS) aufweist.

Bei dem hier gewählten Ausführungsbeispiel wurde zur Vereinfachung und Kostenersparnis bei der Herstellung auf einen umlaufenden Vorrastnocken (VN) verzichtet und die Raststellung und die Vormontageraststellung durch einen einzigen umlaufenden Rastnocken (N) erreicht. Durch Anpassung der Form und der Breite des Rastnockens (N) an den Abstand und die Form der Rastnasen (S, VS) kann auch hier erreicht werden, daß das zweite Gehäuseteil (G2) lagefest mit dem dritten Gehäuseteil (G3) in der Vormontageraststellung verbindbar ist.

Bei den Ausführungsbeispielen unter Figur 4 und Figur 5 ist es auch möglich, neben dem Hebelteil (H) ein zweites Hebelteil (H2) anzuordnen, welches die Vorrastnase (VS) aufweist. Dadurch ist es möglich, die Rastkraft besser abzustimmen.

In Figur 6 ist ein weiteres Ausführungsbeispiel des Erfindungsgegenstands gezeigt, bei dem die Ausgestaltung des zweiten Gehäuseteils (G2) der Ausgestaltung des zweiten Gehäuseteils (G2) wie unter Figur 4 beschrieben entspricht. Dem umlaufenden Rastnocken (N) ist auch hier ein umlaufender Vorrastnocken (VN) nachgelagert. Im Gegensatz zu dem unter Figur 4 beschriebenen Ausführungsbeispiel ist dem Hebelteil (H), das eine Rastnase (S) aufweist, die bei der endgültigen Raststellung mit dem Rastnocken (N) verrastet, ein zweites Hebelteil (H2) zugeordnet.

Das zweite Hebelteil (H2) weist an seinem Ende eine Vorrastnase (VS) auf. Das zweite Hebelteil (H2) ist länger ausgebildet als das Hebelteil (H) und hier beispielhaft hinter diesem angeordnet. Wie bei dem hier gezeigten Ausführungsbeispiel verrastet die Vorrastnase (VS) in der Vormontageraststellung hinter dem Vorrastnocken (VN), wenn das dritte Gehäuseteil (G3) in das zweite Gehäuseteil (G2) in Montagerichtung (M) (siehe Pfeil) eingeschoben wird. Durch die Länge der Hebelteile (H, H2), die Ausbildung von Höhe und Form der Rastnasen (S, VS) und durch die Form und die Höhe der Rastnocken (N, VN) lassen sich bei diesem Ausführungsbeispiel die Rastkräfte für die Montagerastung und die endgültige Rastung auf einfache und besonders zuverlässige Weise bei einem gewählten Material oder gewählten Materialien einstellen, so daß in allen Raststellungen eine hohe Sicherheit für die Verrastung erreicht wird und insbesondere in der Vormontageraststellung erreicht wird, daß das dritte Gehäuseteil leicht und ohne Beschädigungen von dem zweiten Gehäuseteil (G2) gelöst werden kann.

Wie schon zu den Figuren 1a bis 3b erläutert, weist das zweite Gehäuseteil (G2) mindestens einen ersten Anschlag (A1) und weist das dritte Gehäuseteil (G3) mindestens einen zweiten Anschlag (A2) auf. Diese Anschläge sind auch in den Figuren 4, 5 und 6 gekennzeichnet. Bei allen gezeigten Ausführungsbeispielen sind die Rastnasen (S, VS) und die Rastnocken (N, VN) derart angeordnet, daß sowohl in der Vormontageraststellung als auch in der endgültigen Raststellung die Gehäuseteile (G2, G3) lagefest, das heißt formschlüssig und/oder kraftschlüssig miteinander verbunden sind, so daß auch bei hoher Beanspruchung, z.B. in Flugzeugen, ein Klappern nicht auftreten kann. Durch die Rasteinrichtung werden dabei bei der endgültigen Raststellung die Anschläge (A1, A2) festen Kontakt zueinander haben.

### Bezugszeichenliste

Verschwenkbare Leseleuchte für Fahrzeuge, insbesondere für Flugzeuge
- (A): Fassung
- (A1): erster Anschlag
- (A2): zweiter Anschlag
- (B): Befestigungselemente
- (F): Reflektor
- (G1): erstes Gehäuseteil
- (G2): zweites Gehäuseteil
- (G3): drittes Gehäuseteil
- (H): Hebelteile
- (H2): zweites Hebelteil
- (I): Lichtquelle
- (L): Lichtscheibe
- (M): Montagerichtung
- (N): Rastnocken
- (R): Rasteinrichtung
- (S): Rastnase
- (VS): Vorrastnase
- (VN): Vorrastnocken

## Patentansprüche

1. Verschwenkbare Leseleuchte für Fahrzeuge, insbesondere Flugzeuge, mit einem Gehäuse, das ein erstes Gehäuseteil (G1) zur Montage in dem Fahrzeug aufweist, ein zweites Gehäuseteil (G2) aufweist, das verschwenkbar in dem ersten Gehäuseteil (G1) angeordnet ist und ein drittes Gehäuseteil (G3) aufweist, das über eine Rasteinrichtung (R) mit dem zweiten Gehäuseteil (G2) verbindbar ist und eine Lichtscheibe (L) aufweist und mit einer Lichtquelle (I) in dem Gehäuse, dadurch gekennzeichnet, daß die Rasteinrichtung (R) aus auf dem Umfang und/oder auf dem Umfang verteilt angeordneten Rastelementen besteht, daß die Rastelemente als ein umlaufender Rastnocken (N) oder eine umlaufende Rastnut und auf dem Umfang verteilt angeordneten Hebelteilen (H) mit Rastnasen (S) aufgebaut sind, daß die Rasteinrichtung (R) eine Vormontagerasteinrichtung aufweist, daß die Vormontagerasteinrichtung Hebelteile (H) mit Vorrastnasen (VS) und/oder einen Vorrastnocken (VN) oder eine Vorrastnut aufweist, die eine geringere Länge und/oder Höhe haben als die Hebelteile (H), die Rastnasen (S) und der Rastnocken (N) oder die Rastnut der Rasteinrichtung (R).

2. Leseleuchte nach Anspruch 1, dadurch gekennzeichnet, daß die Hebelteile (H) der Vormontagerasteinrichtung die Hebelteile (H) der Rasteinrichtung (R) sind.

3. Leseleuchte nach Anspruch 2, dadurch gekennzeichnet, daß die Vorrastnasen (VS) die Rastnasen (S) der Rasteinrichtung (R) sind und daß den umlaufenden Rastnocken (N) der Rasteinrichtung (R) ein umlaufender Vorrastnocken (VN) mit einer Höhe in Montagerichtung (M) vorgelagert ist, die geringer ist als die Höhe des Rastnockens (N).

4. Leseleuchte nach Anspruch 3, dadurch gekennzeichnet, daß der Abstand zwischen den Rastnocken (N) und dem Vorrastnocken (VN) der Breite und der Form der Rastnase (S) angepaßt ist.

5. Leseleuchte nach Anspruch 2, dadurch gekennzeichnet, daß die Vorrastnocken (VN) die Rastnocken (N) der Vormontagerasteinrichtung und der Rasteinrichtung (R) sind und daß die Hebelteile (H) eine Vorrastnase (VS) aufweisen, die der Rastnase (S) in Montagerichtung (M) vorgelagert ist.

6. Leseleuchte nach Anspruch 5, dadurch gekennzeichnet, daß die Rastnase (S) und die Vorrastnase (VS) unterschiedliche Höhen aufweisen.

7. Leseleuchte nach Anspruch 6, dadurch gekennzeichnet, daß der Abstand zwischen der Rastnase (S) und der Vorrastnase (VS) der Breite und der Form des Rastnockens (N) angepaßt ist.

8. Leseleuchte nach Anspruch 2, dadurch gekennzeichnet daß die Hebelteile (H) eine Vorrastnase (VS) aufweisen, die der Rastnase (S) in Montagerichtung (M) vorgelagert ist und daß dem Rastnocken (N) ein Vorrastnocken (VN) in Montagerichtung (M) nachgelagert ist.

9. Leseleuchte nach Anspruch 8, dadurch gekennzeichnet, daß die Rastnase (S) und die Vorrastnase (VS) unterschiedliche Höhen aufweisen und daß der Rastnocken (N) und der Vorrastnocken (VN) unterschiedliche Höhen aufweisen.

10. Leseleuchte nach Anspruch 9, dadurch gekennzeichnet, daß der Abstand zwischen der Rastnase (S) und der Vorrastnase (VS) dem Abstand zwischen dem Rastnocken (N) und dem Vorrastnocken (VN) angepaßt ist.

11. Leseleuchte nach Anspruch 1, dadurch gekennzeichnet, daß jedem Hebelteil (H) der Rasteinrichtung (R) ein zweites Hebelteil (H2) zugeordnet ist, daß das zweite Hebelteil (H2) länger ist als das Hebelteil (H) und daß das zweite Hebelteil (H2) eine Vorrastnase (VS) aufweist, die mit einem Rastnocken (N) oder einem dem Rastnocken (N) in Montagerichtung (M) nachgelagerten Vorrastnocken (VN) eine Vormontagerasteinrichtung bildet.

12. Leseleuchte nach mindestens einem der vorstehenden Ansprüche, dadurch gekennzeichnet, daß die Abstände und die Formen des Rastnockens (N), des Vorrastnockens (VN), der Rastnasen (N), der Vorrastnasen (VS) und der Anschläge (AN1, AN2) zwischen dem zweiten Gehäuseteil (G2) und dem dritten Gehäuseteil (G3) derart ausgebildet sind, daß sowohl in der Vormontageraststellung als auch in der endgültigen Raststellung das zweite Gehäuseteil (G2) kraftschlüssig und/oder formschlüssig mit dem dritten Gehäuseteil (G3) verbunden ist.

13. Leseleuchte nach mindestens einem der vorstehenden Ansprüche, dadurch gekennzeichnet, daß der umlaufende Rastnocken (N) und/oder der Vorrastnocken (VN) auf dem inneren Umfang des zweiten Gehäuseteils (G2) angeordnet ist und daß die Hebelteile (H) über den Umfang des dritten Gehäuseteils (G3) verteilt sind.

## Claims

1. A swivelling reading light for vehicles, particularly aircraft, having a housing which comprises a first housing part (G1) for assembly in the vehicle, a second housing part (G2) which is disposed so that it can swivel in the first housing part (G1), and a third housing part (G3) which can be attached to the second housing part (G2) via a locking device (R) and has a light cover lens (L), and having a light source (I) in the housing, characterised in that the locking device (R) consists of locking elements disposed on the periphery and/or distributed on the periphery, that the locking elements are constructed as an encircling locking lug (N) or an encircling locking groove and lever parts (H) with locking catches (S) disposed distributed on the periphery, that the locking device (R) comprises a pre-assembly device, that the pre-assembly device comprises lever parts (H) with pre-locking catches (VS) and/or a pre-locking lug (VN) or a pre-locking groove which have a length and/or height which is less than that of the lever parts (H), the locking catches (S) and the locking lug (N) or the locking groove of the locking device (R).

2. A reading light according to claim 1, characterised in that the lever parts (H) of the pre-assembly device are the lever parts (H) of the locking device (R).

3. A reading light according to claim 2, characterised in that the pre-locking catches (VS) are the locking catches (S) of the locking device (R) and that an encircling prelocking lug (VN) having a height in the direction of assembly (M) which is less than the height of the locking lug (N) is mounted in front of the encircling locking lugs (N) of the locking device (R).

4. A reading light according to claim 3, characterised in that the distance between the locking lug (N) and the pre-locking lug (VN) is matched to the width and shape of the locking catch (S).

5. A reading light according to claim 2, characterised in that the pre-locking lugs (VN) are the locking lugs (N) of the pre-assembly locking device and of the locking device (R) and that the lever parts (H) have a pre-locking catch (VS) which is mounted in front of the locking catch (S) in the direction of assembly (M).

6. A reading light according to claim 5, characterised in that the locking catch (S) and the pre-locking catch (VS) have different heights.

7. A reading light according to claim 6, characterised in that the distance between the locking catch (S) and the pre-locking catch (VS) is matched to the width and shape of the locking lug (N).

8. A reading light according to claim 2, characterised in that the lever parts (H) have a pre-locking catch (VS) which is mounted in front of the locking catch (S) in the direction of assembly (M), and that a pre-locking lug (VN) is mounted after the locking lug (N) in the direction of assembly (M).

9. A reading light according to claim 8, characterised in that the locking catch (S) and the pre-locking catch (VS) have different heights, and that the locking lugs (N) and the pre-locking lugs (VN) have different heights.

10. A reading light according to claim 9, characterised in that the distance between the locking catch (S) and the pre-locking catch (VS) is matched to the distance between the locking lug (N) and the pre-locking lug (VN).

11. A reading light according to claim 1, characterised in that a second lever part (H2) is associated with each lever part (H) of the locking device (R), that the second lever part (H2) is longer than the lever part (H), and that the second lever part (H2) has a pre-locking catch (VS)1 which forms a pre-assembly locking device with a locking lug (N) or with a pre-locking lug (VN) mounted after the locking lug (N) in the direction of assembly (M).

12. A reading light according to at least one of the preceding claims, characterised in that the distances and the shapes of the locking lug (N), the pre-locking lug (VN), the locking catch (N), the pre-locking catch (VS) and the stops (AN1, AN2) between the second housing part (G2) and the third housing part (G3) are designed so that in both the pre-assembly locked position and the final locked position the second housing part (G2) is non-positively and/or positively attached to the third housing part (G3).

13. A reading light according to at least one of the preceding claims, characterised in that the encircling locking lug (N) and/or the pre-locking lug (VN) is disposed on the inner periphery of the second housing part (G2), and that the lever parts (H) are distributed over the periphery of the third housing part (G3).

## Revendications

1. Lampe de lecture basculante pour des véhicules, en particulier des avions, comportant un boîtier qui présente un premier élément de boîtier (G1) pour le montage dans le véhicule, un second élément (G2) qui est agencé en basculement dans le premier élément de boîtier (G1) et un troisième élément de boîtier (G3) qui peut être relié via un dispositif d'enclenchement (R) au second élément de boîtier (G2) et qui présente une plaque d'éclairage (L), et comportant une source lumineuse (I) à l'intérieur du boîtier, caractérisée en ce que le dispositif d'enclenchement (R) est constitué par des éléments d'enclenchement agencés sur la périphérie et/ou agencés en répartition sur la périphérie, en ce que les éléments d'enclenchement sont réalisés sous la forme d'une came d'enclenchement (N) périphérique ou une gorge d'enclenchement périphérique, et comportent des éléments de levier (H) agencés en répartition sur la périphérie, présentant des doigts d'enclenchement (S), en ce que le dispositif d'enclenchement (R) présente un dispositif d'enclenchement pour montage préliminaire, en ce que le dispositif d'enclenchement pour montage préliminaire présente des éléments de levier (H) comprenant des doigts d'enclenchement préliminaires (VS) et/ou une came d'enclenchement préliminaire (VN) ou une gorge d'enclenchement préliminaire, qui présentent une longueur et/ou une hauteur moins importante que les éléments de levier (H), les doigts d'enclenchement (S) et la came d'enclenchement (N) ou la gorge d'enclenchement du dispositif d'enclenchement (R).

2. Lampe de lecture selon la revendication 1, caractérisée en ce que les éléments de levier (H) du dispositif d'enclenchement pour montage préliminaire sont les éléments de levier (H) du dispositif d'enclenchement (R).

3. Lampe de lecture selon la revendication 2, caractérisée en ce que les doigts d'enclenchement préliminaire (VS) sont les doigts d'enclenchement (S) du dispositif d'enclenchement (R), et en ce qu'il est posé, en direction de montage (M), avant les cames d'enclenchement (N) périphériques du dispositif d'enclenchement (R), une came d'enclenchement préliminaire (VN) périphérique présentant, en direction de montage (M), une hauteur qui est inférieure à la hauteur de la came d'enclenchement (N).

4. Lampe de lecture selon la revendication 3, caractérisée en ce que la distance entre les cames d'enclenchement (N) et la came d'enclenchement préliminaire (VN) est adaptée à la largeur et à la forme du doigt d'enclenchement (S).

5. Lampe de lecture selon la revendication 2, caractérisée en ce que les cames d'enclenchement préliminaire (VN) sont la came d'enclenchement (N) du dispositif d'enclenchement pour montage préliminaire et du dispositif d'enclenchement (R), et en ce que les éléments de levier (H) présentent un doigt d'enclenchement préliminaire (VS) qui est posé, en direction de montage (M), avant le doigt d'enclenchement (S).

6. Lampe de lecture selon la revendication 5, caractérisée en ce que le doigt d'enclenchement (S) et le doigt d'enclenchement préliminaire (VS) présentent des hauteurs différentes.

7. Lampe de lecture selon la revendication 6, caractérisée en ce que la distance entre le doigt d'enclenchement (S) et le doigt d'enclenchement préliminaire (VS) est adaptée à la largeur et à la forme de la came d'enclenchement (N).

8. Lampe de lecture selon la revendication 2, caractérisée en ce que les éléments de levier (H) présentent un doigt d'enclenchement préliminaire (VS) qui est posé, en direction de montage (M), avant le doigt d'enclenchement (S), et en ce qu'une came d'enclenchement préliminaire (VN) est posée, en direction de montage (M), après la came d'enclenchement (N).

9. Lampe de lecture selon la revendication 8, caractérisée en ce que le doigt d'enclenchement (S) et le doigt d'enclenchement préliminaire (VS) présentent des hauteurs différentes, et en ce que la came d'enclenchement (N) et la came d'enclenchement préliminaire (VN) présentent des hauteurs différentes.

10. Lampe de lecture selon la revendication 9, caractérisée en ce que la distance entre le doigt d'enclenchement (S) et le doigt d'enclenchement préliminaire (VS) est adaptée à la distance entre la came d'enclenchement (N) et la came d'enclenchement préliminaire (VN).

11. Lampe de lecture selon la revendication 1, caractérisée en ce qu'un second élément de levier (H2) est associé à chaque élément de levier (H) du dispositif d'enclenchement (R), en ce que le second élément de levier (H2) est plus long que l'élément de levier (H), et en ce que le second élément de levier (H2) présente un doigt d'enclenchement préliminaire (VS) qui forme, avec une came d'enclenchement (N) ou une came d'enclenchement préliminaire (VN) posée après la came d'enclenchement (N) en direction de montage (M), un dispositif d'enclenchement pour montage préliminaire.

12. Lampe de lecture selon l'une au moins des revendications précédentes, caractérisée en ce que les distances et les formes de la came d'enclenchement (N), de la came d'enclenchement préliminaire (VN), des doigts d'enclenchement (S), des doigts d'enclenchement préliminaire (VS) et des butées (AN1, AN2), sont choisies entre le second élément de boîtier (G2) et le troisième élément de boîtier (G3) de telle sorte que le second élément de boîtier (G2) est relié par coopération de forces et/ou de formes au troisième élément de boîtier (G3), tant dans la position d'enclenchement préliminaire que dans la position d'enclenchement définitive.

13. Lampe de lecture selon l'une au moins des revendications précédentes, caractérisée en ce que la came d'enclenchement périphérique (N) et/ou la came d'enclenchement préliminaire (VN) est agencée sur la périphérie intérieure du second élément de boîtier (G2), et en ce que les éléments de levier (H) sont répartis sur la périphérie du troisième élément de boîtier (G3).
